# EUROPÄISCHE PATENTANMELDUNG

(11) **EP 1 371 972 A2**
(43) Veröffentlichungstag der Anmeldung: **17.12.2003**
(21) Anmeldenummer: 03013051.2
(22) Anmeldetag: 10.06.2003
(51) Int. Cl.: G01N 23/20, G03B 42/02

(54) **Verfahren zur Visualisierung temperaturabhängiger Prozesse sowie portable Vorrichtung zur Durchführung des Verfahrens**

(30) Priorität: 11.06.2002 DE 10225899
(71) Anmelder: Fraunhofer-Gesellschaft zur Förderung der angewandten Forschung e.V., 80686 München (DE)
(72) Erfinder: Ahrens, Thomas, Dr., D-24598 Boostedt (DE); Puls, Sebastian, D-25524 Itzehoe (DE)
(74) Vertreter: Gagel, Roland, Dr.

(57) **Zusammenfassung**

Die vorliegende Erfindung betrifft ein Verfahren zur Visualisierung temperaturabhängiger Prozesse in Untersuchungsobjekten sowie eine portable Heizvorrichtung (10) für die Durchführung des Verfahrens. Bei dem Verfahren wird das Untersuchungsobjekt mit einer temperaturgeregelten portablen Heizvorrichtung (10) nach einem vorgebbaren Temperatur-Zeit-Verlauf aufgeheizt und während des Aufheizens mehrmals oder kontinuierlich mit Röntgenstrahlung durchstrahlt, um mehrere Röntgenaufnahmen des Untersuchungsobjektes während des Temperatur-Zeit-Verlaufs zu erhalten. Die portable Heizvorrichtung (10) ist entsprechend für den Einsatz in einer Röntgenanlage ausgebildet, um die Röntgenaufnahmen ungehindert durchführen zu können.

Das vorliegende Verfahren sowie die zugehörige Vorrichtung ermöglichen die Beobachtung temperaturabhängiger Vorgänge in Untersuchungsobjekten unter Einsatz von Röntgenstrahlung.

## Beschreibung

### Technisches Anwendungsgebiet

Die vorliegende Erfindung betrifft ein Verfahren zur Visualisierung temperaturabhängiger Prozesse in Untersuchungsobjekten, insbesondere des Aufschmelzvorganges an Lötstellen eines Bauteiles, sowie eine für die Durchführung des Verfahrens ausgebildete portable Heizvorrichtung.

Die Kenntnis vom Verhalten temperaturabhängiger Prozesse in Untersuchungsobjekten spielt in vielen technischen Bereichen eine wichtige Rolle. Ein Beispiel ist das Aufschmelzverhalten von Lotpaste an Bauelementanschlüssen, dessen Kenntnis für die Optimierung des Aufschmelzprozesses sowie der beteiligten Materialien von großem Nutzen sein kann.

### Stand der Technik

Aus der zerstörungsfreien Werkstoffprüfung sind Verfahren zur Visualisierung des inneren Aufbaus von Fügestellen bekannt, bei denen die zu untersuchenden Objekte nach Herstellung der Fügestelle in Röntgenanlagen durchleuchtet werden. Aus dem hierbei erhaltenen Bild lassen sich Rückschlüsse auf die Qualität der Fügestelle ableiten, bspw. die Qualität offener und verdeckter Lötstellen an elektronischen Baugruppen. Eine Beobachtung temperaturabhängiger Prozesse ist mit diesen Verfahren jedoch ohne eine dafür geeignete Heizvorrichtung nicht möglich.

Aus der JP 2002139461 A, der JP 09138073 A, der DE 19541238 A1 und der DE 20109573 U1 sind Heizvorrichtungen bekannt, mit denen jedoch ebenfalls keine temperaturabhängigen Prozesse beobachtet werden.

Die Aufgabe der vorliegenden Erfindung besteht darin, ein Verfahren sowie eine für die Durchführung des Verfahrens geeignete portable Heizvorrichtung zur Verwendung in vorhandenen oder kommerziell, d. h. marktüblich erhältlichen Röntgenanlagen anzugeben, mit denen temperaturabhängige Prozesse in Untersuchungsobjekten visualisiert werden können.

### Darstellung der Erfindung

Die Aufgabe wird mit dem Verfahren sowie der Vorrichtung gemäß den Patentansprüchen 1 bzw. 10 gelöst.

Bei dem vorliegenden Verfahren werden temperaturabhängige Prozesse in Untersuchungsobjekten dadurch visualisiert, dass das Untersuchungsobjekt mit einer temperaturgeregelten portablen Heizvorrichtung nach einem vorgebbaren Temperatur-Zeit-Verlauf, im Folgenden auch als Temperatur-Zeit-Profil bezeichnet, aufgeheizt und während des Aufheizens mehrmals oder kontinuierlich mit Röntgenstrahlung durchstrahlt wird, um mehrere Röntgenaufnahmen des Untersuchungsobjektes während des Temperatur-Zeit-Verlaufs zu erhalten. Durch die Erstellung von Röntgenaufnahmen des Untersuchungsobjektes bzw. des interessierenden Bereiches des Untersuchungsobjektes wird der temperaturabhängige Prozess im Untersuchungsobjekt visualisiert. Die Röntgendurchstrahlung kann hierbei im Radioskopiemodus, d. h. mit kontinuierlicher Durchstrahlung, oder im Einzelbild-Modus, d. h. durch Erstellen von Einzelaufnahmen in bestimmten zeitlichen Abständen erfolgen. Bei dem Betrieb im Radioskopiemodus können bspw. Videoaufnahmen des vollständigen Prozessverlaufs erhalten werden. Selbstverständlich lässt sich das vorliegende Verfahren auch mit anderen Röntgentechniken, so bspw. im Laminographiemodus oder im Tomosynthesemodus einer Röntgenanlage durchführen.

Eine wesentliche Voraussetzung für die Durchführung des vorliegenden Verfahrens ist eine geeignete temperaturgeregelte Heizvorrichtung für die Beaufschlagung des Untersuchungsobjektes mit dem vorgebbaren Temperatur-Zeit-Profil, die die Qualität der Röntgenaufnahmen nicht beeinträchtigt. Herkömmliche Heizgeräte mit PC-gesteuerter Temperatureinstellung und -führung, wie sie bspw. für Aus- und Einlötgeräte in der Elektronikfertigung bekannt sind, können hierbei nicht eingesetzt werden. Derartige Heizgeräte würden aufgrund der Absorption der Röntgenstrahlung keine Röntgenaufnahmen ermöglichen. Bei dem vorliegenden Verfahren muss daher eine Heizvorrichtung eingesetzt werden, die einen ausreichend breiten Durchlasskanal für Röntgenstrahlung aufweist, in dem das Untersuchungsobjekt angeordnet wird und der für Röntgenstrahlung durchlässig ist.

Grundsätzlich können beim vorliegenden Verfahren unterschiedliche Heiztechniken angewendet werden. So kann bspw. das Untersuchungsobjekt durch Konvektion, d. h. durch Wärmeübertragung mittels eines heißen Gases von der Unterseite, seitlich oder von der Oberseite her aufgeheizt werden. In einer weiteren Ausgestaltung des vorliegenden Verfahrens kann Strahlung zur Aufheizung des Untersuchungsobjektes eingesetzt werden. Hierfür kommt insbesondere Infrarotstrahlung mit kurz-, mitteloder langwelligen Strahlern in Frage. Auch Halogenlampen ohne oder mit Infrarotfilter, Glühlampen, Glühwendeln, Glühstrümpfe (Gasheizung) oder Laser können eingesetzt werden.

In einer bevorzugten Ausgestaltung des vorliegenden Verfahrens wird eine portable Heizvorrichtung auf Basis von Wärmeleitung eingesetzt, wie sie aus der nachfolgenden Beschreibung ersichtlich ist. Selbstverständlich lassen sich jedoch auch andere geeignete Heizvorrichtungen bei dem vorliegenden Verfahren einsetzen, die Wärmeleitung, d. h. Kontaktwärme aus einer oder mehreren heizbaren oder selbstheizenden Zwischenlage(n) oder Trägerplatten, für die Aufheizung nutzen.

Die vorliegende portable Heizvorrichtung für die Durchführung des Verfahrens umfasst eine Trägerplatte aus einem für Röntgenstrahlung im Wesentlichen durchlässigen Material, die einen Messbereich für die Aufbringung eines Untersuchungsobjektes aufweist, ein oder mehrere vorzugsweise in der Trägerplatte integrierte Heizelemente zur Aufheizung der Trägerplatte, die außerhalb des Messbereiches angeordnet sind, einen Temperatursensor zur Erfassung einer Temperatur der Trägerplatte oder des darauf aufgebrachten Untersuchungsobjektes, eine Leistungselektronik für die elektrische Versorgung der Heizelemente, eine Regelungselektronik zur Regelung der Leistungselektronik in Abhängigkeit von der erfassten Temperatur nach dem vorgebbaren Temperatur-Zeit-Profil sowie eine Halterung für die Trägerplatte. Die Halterung ist bei der vorliegenden Vorrichtung derart ausgebildet, dass sie den ungehinderten Durchlass von Röntgenstrahlung auf einem Strahlungskanal durch den Messbereich bis zu einem Röntgendetektor ermöglicht. Unter Strahlungskanal ist hierbei ein gedachter geradliniger Kanal zu verstehen, der einen ausreichend großen Querschnitt für die Erstellung von Röntgenaufnahmen des Untersuchungsobjektes bzw. eines interessierenden Teils des Untersuchungsobjektes aufweist.

Vorzugsweise umfasst die Heizvorrichtung zusätzlich eine Kühleinrichtung, die ebenfalls von der Regelungselektronik angesteuert wird und bei Bedarf zur Kühlung des Untersuchungsobjektes bzw. der Trägerplatte eingesetzt wird. Eine bevorzugte Ausgestaltung dieser Kühleinrichtung ist ein Lüfter, der zumindest die Oberseite der Trägerplatte mit Kühlluft beaufschlagt. Durch diese Kombination aus Heizelementen und Kühleinrichtung lässt sich ein optimales Temperatur-Zeit-Profil, wie es insbesondere in der Löttechnik zum Einsatz kommt, auf das Untersuchungsobjekt anwenden.

Die Regelungselektronik und die Leistungselektronik sind vorzugsweise ebenfalls an der Halterung angeordnet. Die Regelungselektronik weist hierbei eine Bleiummantelung auf, die die empfindlichen Bauelemente vor der Röntgenstrahlung schützt.

Mit der vorliegenden portablen Heizvorrichtung wird eine heiz- und ggf. kühlbare Unterlage zur Aufnahme eines Untersuchungsobjektes bereitgestellt, die auf Basis eines vorzugsweise in der Trägerplatte integrierten Temperatursensors die tatsächliche Temperatur als Istwert erfasst und an die Regelelektronik übermittelt. Die Regelelektronik vergleicht den gemessenen Istwert mit dem Sollwert eines vorgebbaren Temperatur-Zeit-Profils und regelt die Heizleistung durch Ansteuerung der Leistungselektronik sowie des ggf. vorhandenen Lüfters, um die Abweichung zwischen Ist- und Sollwert zu minimieren. Die Trägerplatte sowie deren Halterung sind derart ausgestaltet, dass sie eine problemlose Einbringung in Röntgenanlagen zur Durchstrahlung des Untersuchungsobjektes erlauben. Insbesondere wird die Durchleuchtung des Untersuchungsobjektes durch die vorliegende Vorrichtung nicht gestört. Die Mess- und Regelungselektronik können durch eine geeignete Röntgenstrahlung absorbierende Abschirmung vor der Röntgenstrahlung geschützt werden. Die Heizvorrichtung ist vorzugsweise weiterhin mit einer elektronischen und einer elektrischen Schnittstelle zur Übergabe der elektrischen Leistung sowie des Sollprofils an die Heizvorrichtung und zum Auslesen des Istprofils ausgestattet.

Mit der vorliegenden portablen Heizvorrichtung und dem vorgeschlagenen Verfahren lassen sich Untersuchungsobjekte in einer Röntgenanlage mit einem vorgebbaren Temperatur-Zeit-Profil beaufschlagen, so dass durch Erstellung mehrerer Röntgenaufnahmen im Verlauf der Aufheizung bzw. Abkühlung des Untersuchungsobjektes temperaturabhängige Prozesse visualisiert werden können. Das Verfahren sowie die Vorrichtung eignen sich hierbei insbesondere zur Observierung und Beschreibung des dynamischen Aufschmelzverhaltens, der Koagulation oder auch der Trennung, des Benetzungs- oder Entnetzungsverhaltens von Lotpaste bzw. Lotschmelze. Mit dem Verfahren lässt sich auch Beginn und/oder Ende der Porenbildung in der Lotpaste bzw. Lotschmelze sowohl von offenliegenden Lotstellen als auch von verdeckten Lotstellen unter Einbeziehung der Röntgengrobstruktur des Verbindungsvolumens bestimmen.

Das vorliegende Verfahren sowie die zugehörige Vorrichtung lassen sich damit zur Optimierung von Lot-, Flussmittel- oder Lotpasten-Eigenschaften in der Entwicklungs- bzw. Prozessanpassungsphase des jeweiligen Produktes einsetzen. Das Verfahren und die zugehörige Vorrichtung eignen sich auch sehr gut für die Unterstützung bei der Auswahl geeigneter Hilfsstoffe zur Fertigung einer aus Leiterplatte und Bauelementen bestehenden Baugruppe. Sie ermöglichen ferner die Verbesserung und Optimierung der Materialien von Leiterplatten sowie Bauelementen mit den jeweiligen Lotoberflächen als einzeln variable Parameter sowie deren Anpassung an vorhandene Lötprofile und die Verbesserung und Optimierung des Lötprofils und dessen Anpassung an spezifizierte Hilfsstoffe und Materialien im Fertigungsprozess.

Ein weiteres vorteilhaftes Anwendungsgebiet der vorliegenden Vorrichtung sowie des zugehörigen Verfahrens ist der Einsatz in einer Röntgenanlage für Demonstrations- sowie Schulungszwecke zu den Themen Aufschmelzen von Massivlotdepots, Aufschmelzen von Lotpaste, Benetzung von Kontaktflächen sowie Lötoberflächen, Entnetzung von Kontaktflächen sowie Lötoberflächen, Porenbildung in Lötstellen sowie Einfluss von Schutzgas bei allen vorhergehenden Themen.

### Kurze Beschreibung der Zeichnungen

Die vorliegende Erfindung wird nachfolgend anhand von Ausführungsbeispielen in Verbindung mit den Zeichnungen nochmals beispielhaft erläutert. Hierbei zeigen:
- Fig. 1: ein Beispiel für eine mögliche Ausgestaltung einer Heizvorrichtung gemäß der vorliegenden Erfindung;
- Fig. 2: eine Prinzipskizze einer Röntgendurchstrahlungseinrichtung mit einer Heizvorrichtung zur Durchführung des vorliegenden Verfahrens; und
- Fig. 3: beispielhaft ein Temperatur-Zeit-Profil, wie es mit der vorliegenden Heizvorrichtung realisierbar ist.

### Wege zur Ausführung der Erfindung

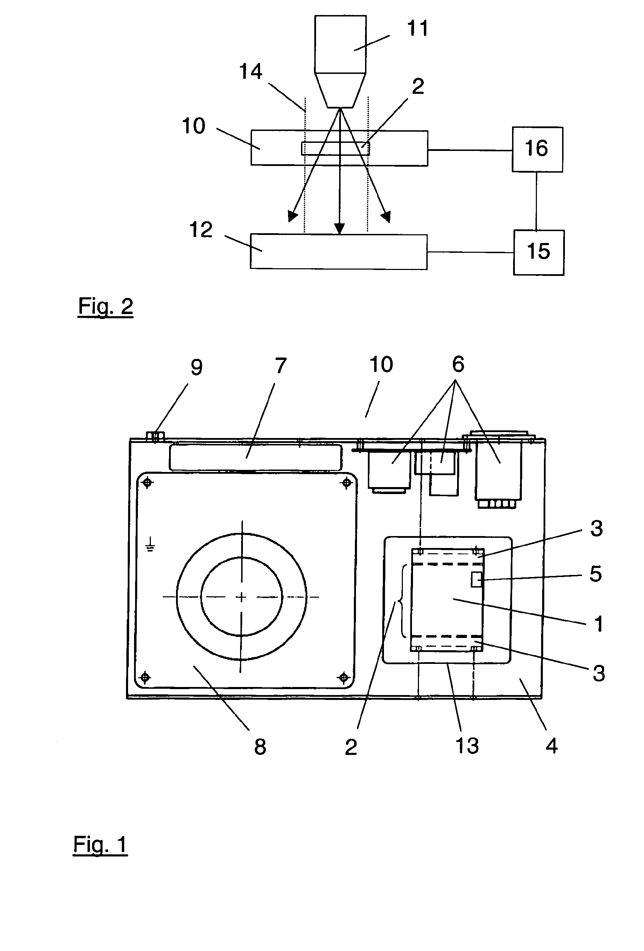

Figur 1 zeigt beispielhaft eine portable Heizvorrichtung gemäß der vorliegenden Erfindung, wie sie in dem erfindungsgemäßen Verfahren zum Einsatz kommen kann. Diese Heizvorrichtung erlaubt die Beaufschlagung eines aufgebrachten Untersuchungsobjektes mit einem vorgebbaren Temperatur-Zeit-Verlauf und damit beispielsweise die individuelle Einstellung eines gewünschten Lötprofils zur Aufschmelzung der Lötstellen.

Die Heizvorrichtung besteht in diesem Beispiel aus einer beheizbaren, wärmeleitenden Trägerplatte 1 aus Aluminium. Aluminium weist eine gute Wärmeleitung sowie eine geringe Absorption für Röntgenstrahlung auf. Diese Trägerplatte 1 ist in einer Halterung 4 angeordnet, die oberhalb und unterhalb der Trägerplatte 1 so weit geöffnet ist, dass keine Behinderung der durch ein auf der Trägerplatte 1 aufgebrachtes Untersuchungsobjekt fallenden Röntgenstrahlung erfolgt. Die Halterung 4 ist im vorliegenden Beispiel als Halterungsplatte ausgebildet, kann jedoch auch in Form eines Gestells oder Gehäuses ausgestaltet sein. Im vorliegenden Beispiel weist diese Halterung 4 einen annähernd quadratischen Ausschnitt 13 auf, in dem die Trägerplatte 1 über dünne, nicht dargestellte Haltestege gehalten wird. Dieser durchgehende Ausschnitt 13, der ein Fenster für die Röntgenstrahlung bildet, hat im vorliegenden Beispiel Dimensionen von etwa 10 x 10 cm. Die Trägerplatte 1 ist mit Dimensionen von etwa 5 x 5 cm ausgebildet. In der Figur ist ein Messbereich 2 der Trägerplatte 1 angedeutet, in dem keine Heizelemente 3 zur Aufheizung der Trägerplatte 1 angeordnet sind. Die Heizelemente 3 müssen bei der vorliegenden Vorrichtung außerhalb dieses Messbereiches 2 liegen, da sie aufgrund ihres Röntgenstrahlen absorbierenden Materials, in der Regel Stahl, die Röntgenaufnahme des Untersuchungsobjektes beeinträchtigen würden.

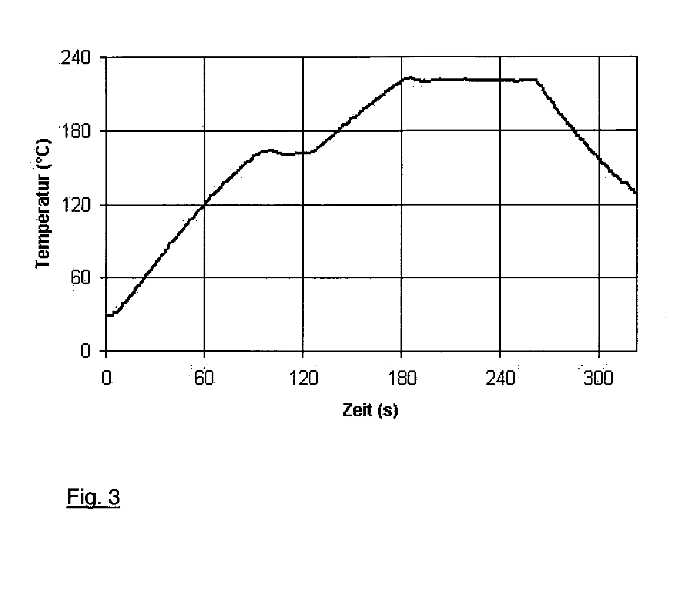

Auf der Halterung 4 ist weiterhin ein Ventilator 8 angeordnet, im vorliegenden Fall ein Axiallüfter, mit dem die Trägerplatte 1 und das Untersuchungsobjekt zur Vermeidung von Überschwingungen der Temperatur beim Aufheizen und zur Einstellung einer definierten Abkühlung entsprechend einem Sollprofil gekühlt werden können. Auf der gleichen Halterung 4 ist eine Leistungselektronik 6 montiert und mit den Heizelementen 3 der Trägerplatte 1 verbunden. Die Leistungselektronik 6 besteht aus einem Trafo, einer Sicherung sowie einem Netzanschluss. Weiterhin ist auf dieser Halterung 4 eine Regelungselektronik 7 mit einem Mikroprozessor zu erkennen, der mit der Leistungselektronik 6 und dem Ventilator 8 verbunden ist. Die Regelungselektronik 7 ist von einer Bleiummantelung umgeben, die in dieser Figur nicht explizit zu erkennen ist. In der Trägerplatte 1 ist weiterhin ein Temperatursensor 5 enthalten, der ebenfalls mit der Regelungselektronik 7 verbunden ist. Die Regelungselektronik 7 regelt die Leistung der Heizelemente 3 in Abhängigkeit von der gemessenen Temperatur nach einem vorgebbaren Temperatur-Zeit-Profil. Dieses Temperatur-Zeit-Profil wird über eine RS232-Schnittstelle von einem außerhalb der Röntgenanlage befindlichen Rechner übertragen. Diese Computerschnittstelle ist an der Halterung 4 als D-Sub 9 Stecker 9 ausgebildet. In dem in Figur 1 nicht dargestellten Computer 16 (vgl. Fig. 2) ist ein entsprechendes Programm zur Ansteuerung der Elektronik verfügbar.

Im vorliegenden Ausführungsbeispiel wird eine Röntgenanlage mit einem Flächendetektor 12 als Bildwandler verwendet, der die laufende Bildinformation über eine Videoschnittstelle an einen Videorecorder zur Aufnahme auf einer Videokassette liefert. Eine Prinzipskizze der Anordnung ist in der Figur 2 dargestellt. Diese Figur zeigt die Röntgenquelle 11 sowie den Flächendetektor 12, der die Intensitätsverteilung der auftreffenden Röntgenstrahlung in entsprechende Bildsignale zur Aufnahme auf einem Videorecorder 15 umsetzt. Zwischen der Röntgenquelle 11 und dem Röntgenbilddetektor 12 wird die soeben beschriebene Heizeinrichtung 10 eingesetzt. In der Figur ist hierbei lediglich schematisch der Messbereich 2 der Trägerplatte 1 sowie der Durchstrahlungskanal 14 angedeutet, in dem Röntgenstrahlung - von der Heizvorrichtung 10 ungehindert - durch den Messbereich 2 treten kann. Das Untersuchungsobjekt wird in diesem Messbereich 2 angeordnet.

Im vorliegenden Beispiel soll das Aufschmelzverhalten von Lotpaste an Bauelementanschlüssen mit Hilfe dieser Anordnung visualisiert werden. Hierzu wird der Röntgenheiztisch (Heizvorrichtung 10) in eine bestehende Röntgenanlage so eingebaut, dass eine der Anlage entsprechende Handhabungseinrichtung zur Rotation sowie x-, y- und z-Positionierung weiterhin frei möglich ist. Netz- und Schnittstellenkabel werden durch bestehende abgeschirmte Kanäle der Röntgenanlage nach außerhalb der abgeschirmten Röntgenkabine verlegt und an den Stromanschluss bzw. an den PC angeschlossen, auf dem die zum Röntgenheiztisch zugehörige Software installiert ist.

Zur Vorbereitung des Untersuchungsobjektes, im vorliegenden Fall eine Baugruppe mit einer SMD-Lotpaste, wird dabei als Erstes die Lotpaste auf die Anschlussflächen auf Leiterplatten-Coupons aufgebracht. Darauf werden die entsprechenden Bauelemente gesetzt. Das vorbereitete Untersuchungsobjekt wird dann auf die Trägerplatte 1 des Röntgenheiztisches gelegt.

Nach der Anordnung des Untersuchungsobjektes auf der Trägerplatte 1 wird die Röntgenanlage geometrisch so eingestellt, dass eine bestmögliche Beobachtung stattfinden kann. Die abgeschirmte Röntgenkammer wird geschlossen und das gewünschte Temperatur-Zeit-Profil am PC 16 ausgewählt. Anschließend wird die Röntgendurchstrahlung eingeschaltet und das Temperatur-Zeit-Profil gestartet. Figur 3 zeigt beispielhaft ein Temperatur-Zeit-Profil, wie es mit der vorliegenden Heizvorrichtung 10 realisiert werden kann.

Die vom Flächendetektor 12 erhaltene Bildinformation wird mittels eines geeigneten Mediums, bspw. durch den Videorecorder 15 oder durch Videodateispeicherung auf der Festplatte des Computers 16, aufgezeichnet. Die hierbei erhaltenen Röntgenaufnahmen beinhalten wichtige Informationen über das Aufschmelzund Benetzungsverhalten der SMD-Lotpaste.

Potentielle Anwender des vorliegenden Röntgenheiztisches sowie des erfindungsgemäßen Verfahrens sind alle diejenigen Inhaber bzw. Nutzer von Röntgenanlagen, die mit Materialien oder Konstruktionen arbeiten, die im Verlauf der Herstellung und/oder Anwendung eine Wärmebehandlung erfahren. Mit dem vorliegenden Röntgenheiztisch kann der Verlauf eines Temperatur-Zeit-Profils für das bestmögliche Ergebnis optimiert werden. Es kann jedoch auch bspw. eine kritische Obergrenze eines Temperaturprofils ermittelt werden. Die Besonderheit an dem vorliegendem Heiztisch ist seine Eignung für den Einsatz in einer laufenden Röntgenanlage, so dass die ablaufenden temperaturabhängigen Vorgänge in Echtzeit ohne Störung der Röntgenaufnahme beobachtet und dokumentiert werden können. Die im vorliegenden Beispiel genannte Anwendung der Visualisierung des Aufschmelz- und Benetzungsverhaltens von SMD-Lotpaste an Anschlüssen elektronischer oder mechanischer Bauelemente liefert eine Vielzahl qualitativer Ergebnisse. So kann der Temperatur-Zeit-Verlauf aufgrund der gewonnenen Erkenntnisse für eine Lotpaste an einem Lötanschluss eines Bauelementes oder Anschlussdrahtes bzw. auf einem Lötstützpunkt oder einem Leiterplatten-Pad spezifisch für die verwendete Lotpaste optimiert werden. Aus der Visualisierung wird die Zeit bzw. Temperatur erhalten, die in einem Profil bis zum vollständigen Aufschmelzen eines Lot- oder Lotpastendepots vergeht bzw. benötigt wird. Das Gleiche gilt für die Zeit bzw. Temperatur bis zur vollständigen Benetzung oder bis zum Beginn oder Ende der Porenbildung. Diese Erkenntnisse sind gleichermaßen für den Lotpastenhersteller wie auch für den Baugruppenhersteller von Interesse. Der Lotpastenhersteller gewinnt Informationen zum dynamischen Verhalten eines Systems und kann diese Information bei der Entwicklung neuer chemischer Systeme zusätzlich zum Verarbeitungsverhalten beim Lotpastenauftrag einbeziehen. Desweiteren kann er dieses Verhalten als Qualitätskriterium für die Qualifizierung von Metallpulver-Chargen verwenden. So ist bspw. der Oxidgehalt des Metallpulvers entscheidend für den Verbrauch einer Aktivierung im Flussmittel und für das Aufschmelzverhalten. Der Baugruppenhersteller gewinnt ein neues Kriterium für den Vergleich bzw. die Auswahl sowie die Gleichförmigkeit über diverse Chargen von Lotpasten, indem er das Aufschmelz- und Benetzungsverhalten verschiedener Lotpastenmuster in prozessnahen Lötprofilen, aber mit geringen Pastenmengen, beobachten und dokumentieren kann.

Bei dem vorliegenden Beispiel lassen sich aus den erhaltenen Röntgenaufnahmen weiterhin Zeit bzw. Temperatur bis zum Beginn einer Schädigung von Leiterplatte oder Bauelement ermitteln. Selbstverständlich müssen hierbei mehrere Temperatur-Zeit-Profile gefahren werden. Diese Information ist gleichermaßen für Baugruppenhersteller und Bauelementehersteller von Interesse und gibt eine gegenüber dem Serienprozess wesentlich vereinfachte Methode der Ermittlung des Temperatur-Zeit-Prozessfensters unter Berücksichtigung der gegenläufigen Forderungen an den Lötwärmebedarf und der Lötwärmebeständigkeit an.

Weiterhin lässt sich mit dem vorliegenden Verfahren bzw. der vorgestellten Vorrichtung der Einfluss benetzungsfördernder oder erkennungsfördernder Strukturen in der Form von Lötanschlussflächen, wie bspw. Löt-Pads auf Leiterplatten oder Terminals an Bauelementen, untersuchen. Dies ist eine wichtige Information für den Entwickler, die Fertigung und die Qualitätssicherung beim Baugruppenhersteller sowie für den Bauelemente- und den Leiterplattenhersteller und den Hersteller manueller oder automatisierter Röntgenprüfgeräte, da hiermit die Fehlererkennbarkeit dynamisch geprüft werden kann.

Auch die Werte des Restsauerstoffgehaltes bei der Durchführung des jeweiligen Versuchs unter Schutzgas können bei allen vorgenannten Punkten ermittelt werden. Dies ist für den Lotpastenhersteller, den Baugruppenfertiger und auch für den Hersteller von Lötsystemen von Interesse, da dieses Verfahren die Ermittlung von Grenzwerten für den Restsauerstoffgehalt im Schutzgas ermöglicht und damit Vorgaben für die Konstruktion und Auslegung sowie für den Gasverbrauch von Lötsystemen liefert.

### Bezugszeichenliste

- 1: Trägerplatte
- 2: Messbereich
- 3: Heizelemente
- 4: Halterung
- 5: Temperatursensor
- 6: Leistungselektronik
- 7: Regelungselektronik
- 8: Ventilator
- 9: D-Sub 9 Stecker
- 10: Heizvorrichtung
- 11: Röntgenquelle
- 12: Röntgen-Flächendetektor
- 13: Ausschnitt
- 14: Strahlungskanal
- 15: Videorecorder
- 16: Computer

## Patentansprüche

1. Verfahren zur Visualisierung temperaturabhängiger Prozesse in Untersuchungsobjekten, insbesondere des Aufschmelzvorganges an Lötstellen eines Bauteiles, bei dem das Untersuchungsobjekt mit einer temperaturgeregelten portablen Heizvorrichtung (10) nach einem vorgebbaren Temperatur-Zeit-Verlauf aufgeheizt und während des Aufheizens mehrmals oder kontinuierlich mit Röntgenstrahlung durchstrahlt wird, um mehrere Röntgenaufnahmen des Untersuchungsobjektes während des Temperatur-Zeit-Verlaufs zu erhalten.

2. Verfahren nach Anspruch 1,
**dadurch gekennzeichnet,**
**dass** eine portable Heizvorrichtung (10) eingesetzt wird, die das Untersuchungsobjekt durch Konvektion aufheizt.

3. Verfahren nach Anspruch 1,
**dadurch gekennzeichnet,**
**dass** eine portable Heizvorrichtung (10) eingesetzt wird, die das Untersuchungsobjekt durch Strahlung aufheizt.

4. Verfahren nach Anspruch 1,
**dadurch gekennzeichnet,**
**dass** eine portable Heizvorrichtung (10) eingesetzt wird, die das Untersuchungsobjekt durch Wärmeleitung aufheizt.

5. Verfahren nach Anspruch 4,
**dadurch gekennzeichnet,**
**dass** eine portable Heizvorrichtung mit einer Trägerplatte (1) aus einem für Röntgenstrahlung im Wesentlichen transparenten Material und einer Halterung (4) eingesetzt wird, die den ungehinderten Durchlass der Röntgenstrahlung auf einem Strahlungskanal (14) durch einen Messbereich (2) der Trägerplatte (1) bis zu einem Röntgendetektor (12) ermöglicht.

6. Verfahren nach einem der Ansprüche 1 bis 5 zur Visualisierung dynamischer Prozesse in Lotpasten oder Lotschmelzen, insbesondere des dynamischen Aufschmelzverhaltens, der Koagulation oder Trennung, des Benetzungs- oder Entnetzungsverhaltens.

7. Verfahren nach einem der Ansprüche 1 bis 5 zur Bestimmung von Beginn und Ende der Porenbildung in Lotpasten oder Lotschmelzen.

8. Verfahren nach einem der Ansprüche 1 bis 5 zur Untersuchung des Einflusses von Hilfsstoffen bei der Herstellung einer Lötverbindung.

9. Verfahren nach einem der Ansprüche 1 bis 5 zur Untersuchung und/oder Optimierung des Einflusses beteiligter Materialien bei der Herstellung einer Lötverbindung.

10. Portable Heizvorrichtung zur Durchführung des Verfahrens nach einem der vorangehenden Ansprüche, die
- eine Trägerplatte (1), auf die ein Untersuchungsobjekt aufgebracht werden kann,
- ein oder mehrere Heizelemente (3) zur Aufheizung der Trägerplatte (1),
- eine Halterung (4) für die Trägerplatte (1),
- einen Temperatursensor (5) zur Erfassung einer Temperatur der Trägerplatte (1) oder des darauf aufgebrachten Untersuchungsobjektes,
- eine Leistungselektronik (6) für die elektrische Versorgung der Heizelemente (3) und
- eine Regelungselektronik (7) zur Regelung der Leistungselektronik (6) in Abhängigkeit von der erfassten Temperatur nach einem vorgebbaren Temperatur-Zeit-Profil aufweist,
**dadurch gekennzeichnet,**
**dass** die Trägerplatte (1) aus einem für Röntgenstrahlung im Wesentlichen transparenten Material besteht und einen Messbereich (2) aufweist, der keine Heizelemente (3) beinhaltet, wobei die Halterung (4) derart ausgebildet ist, dass sie den ungehinderten Durchlass von Röntgenstrahlung auf einem Strahlungskanal (14) durch den Messbereich (2) bis zu einem Röntgendetektor (12) ermöglicht.

11. Vorrichtung nach Anspruch 10,
**dadurch gekennzeichnet,**
**dass** die Regelungselektronik (7) an der Halterung (4) angeordnet und von einer Bleiummantelung umgeben ist.

12. Vorrichtung nach Anspruch 10 oder 11,
**dadurch gekennzeichnet,**
**dass** eine von der Regelungselektronik (7) ansteuerbare Kühleinrichtung (8) zur Kühlung der Trägerplatte (1) und/oder des Untersuchungsobjektes vorgesehen ist.

13. Vorrichtung nach Anspruch 12,
**dadurch gekennzeichnet,**
**dass** die Kühleinrichtung (8) ein an der Halterung (4) befestigter Lüfter ist.
